(19) **Europäisches Patentamt**
**European Patent Office**
**Office européen des brevets**

(11) **EP 1 834 498 B1**

(12) **EUROPEAN PATENT SPECIFICATION**

(45) Date of publication and mention
of the grant of the patent:
**13.07.2016 Bulletin 2016/28**

(51) Int Cl.:
***H04W 36/00*** (2009.01)

(21) Application number: **05821986.6**

(86) International application number:
**PCT/SE2005/001994**

(22) Date of filing: **21.12.2005**

(87) International publication number:
**WO 2006/071178 (06.07.2006 Gazette 2006/27)**

(54) **HANDOVER PROCEDURE FROM A UMTS RADIO NETWORK TO A GSM RADIO NETWORK**

HANDOVER-PROZEDUR VON EINEM UMTS-FUNKNETZWERK ZU EINEM
GSM-FUNKNETZWERK

PROCEDURE DE TRANSFERT INTERCELLULAIRE DEPUIS UN RESEAU DE
RADIOCOMMUNICATION UMTS VERS UN RESEAU DE RADIOCOMMUNICATION GSM

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **29.12.2004 SE 0403201**

(43) Date of publication of application:
**19.09.2007 Bulletin 2007/38**

(73) Proprietor: **Telia Company AB
106 63 Stockholm (SE)**

(72) Inventor: **SOMMER, Magnus
S-138 37 ÄLTA (SE)**

(74) Representative: **Holmberg, Magnus
Groth & Co KB
Box 6107
102 32 Stockholm (SE)**

(56) References cited:
**EP-A1- 1 257 141      WO-A-2004/051422
WO-A1-00/76194      US-A1- 2004 242 199
US-B1- 6 771 964**

**Description**

TECHNICAL FIELD

The present invention relates to handover from a UMTS radio network to a GSM radio network.

PRIOR ART

To achieve efficient joint action/co-operation between a UMTS radio network and a GSM radio network, there is required an impartial way of comparing the quality of the two radio networks and a well functioning handover between the networks, i.e. a well functioning transfer of calls between the networks.

Today the quality of the UMTS-network typically is evaluated by means of the measures CPICH RSCP or CPICH Ec/No. The measure CPICH RSCP is related to the quality of the uplink, i.e. from a mobile terminal to a base station, and CPICH Ec/No to the downlink, i.e. from the base station to the mobile terminal, but none of them is exactly related/associated to whether there is coverage or not. Today there is a risk that the link is switched off before handover decision has been taken, alternatively that handover is made much earlier than is necessary, which results in an unnecessary large number of.handovers and less time in the new UMTS-network with its service supply.

The American patent US 6,615,044 B2 shows a method for handover between different radio access technologies, so called inter-RAT. Especially a method and a system to trig handover from WCDMA FDD to GSM is discussed. Further is described how a plurality of trigging parameters, for instance transmitted power on uplink and downlink, can be used to trig handover. The power on uplink and downlink are compared with a threshold value, and a trigging condition is regarded to be complied with if the power has exceeded the threshold value during a specified period of time. Further is described that the power of the terminal is compared with a maximal value, and a trigging condition is regarded to be complied with if the power has reached the maximal value a specified number of times during a specified period of time.

One disadvantage with the method which is described in US 6,615,044 B2 is that thresholds are only used to determine when a measuring on the other radio access system, i.e. GSM, shall start. After that is supposed that the Radio Network Controller, RNC, orders measurings on a GSM-cell in order to after that, in an unspecified way, route the mobile to right GSM-cell.

Another disadvantage with the method which is described in US 6,615,044 B2 is that it does not deal with the transitions/changes between the different cases when IRAT measurements are needed for UL, DL, or both. Neither are described any other measurings than GSM RSSI and BSIC measurings in the corresponding IRAT_MEAS_xL-state.

A third disadvantage with the method which is described in US 6,615,044 B2 is that it makes handover to the first GSM-cell at disposal for which it gets a measurement value.

Further, thresholds and other parameters are very simply defined in US 6,615,044 B2. Equivalents to the hysteresis parameters for all transitions/changes do not exist. Neither are there any filtering parameters for the measurement values and there is no choice to switch on/off the BSIC decoding for the GSM measurements.

The patent document US 2003/0031143 A1 describes a method for intersystem handover from FDD to GSM. The current transmission quality is compared with two threshold values, Th1 and Th2. If the quality goes below Th1, a "compressed mode" is activated in which the user equipment, UE, utilizes slots in FDD to determine the transmission characteristic from/to a GSM base station.

US 2003/0031143 A1 aims at reducing the number of "transmission gaps" in "compressed mode", by performing GSM RSSI measurings and GSM BSIC decoding in series instead of parallel. By dividing the measuring into two steps, as suggested, there is a risk of not finding the measured cells when one is trying to decode BSIC. This due to that the mobile moves/is moving. Having a list of measured cells ready when reaching Th2 need not imply that these cells are still possible to find any longer.

One aim of the present invention is to achieve an efficient co-operation between a UMTS radio network and a GSM radio network.

One aspect of the aim is to provide a well functioning handover between the networks including a fair way to compare the quality of the two radio networks.

The coverage in WCDMA FDD is limited either by available uplink power or allowed downlink power. Usually it is the output power of the terminal that sets the limit, i.e. the uplink limit, but for high speed data-services, and also at very heavy load, the downlink may be limiting. Hence another aim of the present invention is to make it possible to control the inter-RAT handover decisions based on the output power in uplink (UL), respective downlink (DL), i.e. to control the handover decisions between different radio access technologies based on the output power in uplink (UL) respective downlink (DL).

## SUMMARY OF THE INVENTION

The present invention relates to a procedure for handover from a UMTS radio network to a GSM radio network according to the independent patent claim 1. Preferred embodiments are defined in the dependent patent claims.

The invention e.g. can be used to achieve co-operation between UMTS- and GSM-networks which at least partially have overlapping coverage.

## BRIEF DESCRIPTION OF THE DRAWINGS

The invention will be described in detail in the following with reference to enclosed drawings, in which

Figure 1 shows an embodiment of an IRAT-handover state model according to the present invention; and
Figure 2 shows $N_{TPC}$, $N_{TFCI}$, $N_{pilot}$ and $N_{data}$.

## DESCRIPTION OF PREFERRED EMBODIMENTS

In the description of the present invention, a number of abbreviations and acronyms will be used, which will be explained in the table below.

| | |
|---|---|
| 3GPP | 3rd Generation Partnership Project for W-CDMA (GSM) |
| CPICH | Common Pilot Channel |
| GSM | Global System for Mobile Communications |
| FDD | Frequency-Division Duplex |
| HO | Handover |
| Inter-RAT, IRAT | Inter Radio Access Technology |
| DL | Downlink |
| RAT | Radio Access Technology |
| RNC | Radio Network Controller |
| RSCP | Received Signal Code Power |
| RSSI | Received Signal Strength Indicator |
| UE | User Equipment |
| UMTS | Universal Mobile Telecommunications System |
| UL | Uplink |
| UTRAN | Universal Terrestrial Radio Access Network |
| WCDMA | Wideband Code Division Multiple Access |

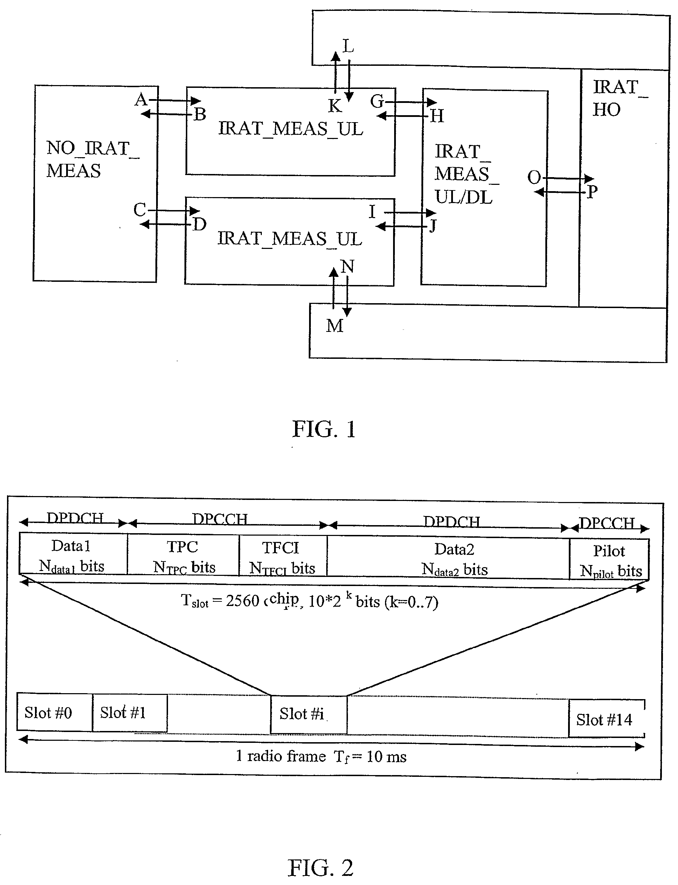

The Inter-RAT handover algorithm according to one embodiment of the present invention is initiated at set up of a call. For each connection between a terminal UE and a base station Node B, a state model according to the invention is initated according to Figure 1. The start state is always the state NO_IRAT_MEAS. In each state a certain set of measurings of both the terminal, also called user terminal, UE, and the base station Node B are required. These measurings are defined below and follows the 3GGP specifications TS25.331 and TS25.433. Each measuring is given an identification number.

The transitions/changes between the different states are marked with the letters A to P as is shown in Figure 1. A transition/change is triggered by one or more, for the transition/change current measurement quantities exceeding a threshold or a threshold value. The measuring quantities are the output power $P_{UL}$ of the terminal (UE), that is the power in uplink UL, and the output power of the base station (Node B) on the dedicated channel which is used for this connection, $P_{DL}$, that is the power in downlink DL. The transitions/changes which are shown in Figure 1 are given by:

$$P_{UL} > P\_IRAT\_MEAS\_UL + HYST\_MEAS\_UL1$$

$$P_{UL} < P\_IRAT\_MEAS\_UL - HYST\_MEAS\_UL2$$

$$P_{DL} > P\_IRAT\_MEAS\_DL + HYST\_MEAS\_DL1$$

$$P_{DL} < P\_IRAT\_MEAS\_DL - HYST\_MEAS\_DL2$$

$$P_{DL} < P\_IRAT\_MEAS\_DL - HYST\_MEAS\_DL2$$

and

$$P_{UL} > P\_IRAT\_MEAS\_UL + HYST\_MEAS\_UL1$$

$$P_{DL} > P\_IRAT\_MEAS\_DL + HYST\_MEAS\_DL1$$

and

$$P_{UL} < P\_IRAT\_MEAS\_UL + HYST\_MEAS\_UL1$$

$$P_{UL} > P\_IRAT\_MEAS\_UL + HYST\_MEAS\_UL1$$

and

$$P_{DL} > P\_IRAT\_MEAS\_DL + HYST\_MEAS\_DL1$$

$$P_{UL} > P\_IRAT\_MEAS\_UL + HYST\_MEAS\_UL1$$

and

$$P_{DL} < P\_IRAT\_MEAS\_DL - HYST\_MEAS\_DL2$$

$$P_{UL} > P\_IRAT\_MEAS\_UL + HYST\_MEAS\_UL1$$

and

$$P_{DL} > P\_IRAT\_MEAS\_DL + HYST\_MEAS\_DL1$$

$$P_{UL} < P\_IRAT\_MEAS\_UL - HYST\_MEAS\_UL2$$

and

$$P_{DL} > P\_IRAT\_MEAS\_DL + HYST\_MEAS\_DL1$$

$$P_{UL} > P\_IRAT\_HO\_UL$$

Failed inter-RAT handover
Failed inter-RAT handover

$$P_{DL} > P\_IRAT\_HO\_DL$$

$$P_{UL} > P\_IRAT\_HO\_UL \ and/or \ P_{DL} > P\_IRAT\_HO\_DL$$

Failed inter-RAT handover

If the output power $P_{UL}$ of the terminal is higher than P_IRAT_MEAS_UL + HYST_MEAS_UL1, then the transition/change A will be activated. The transition/change B will be triggered if the output power $P_{UL}$ of the terminal is lower than P_IRAT_MEAS_UL - HYST_MEAS_UL2. In the same way the transition/change C will be triggered if the output power of the base station on the dedicated link $P_{DL}$ is higher than P_IRAT_MEAS_DL + HYST_MEAS_DL1. The transition/change D is activated when $P_{DL}$ is lower than P_IRAT_MEAS_DL-HYST_MEAS_DL2. The transition/change E is activated when $P_{DL}$ is lower than P_IRAT_MEAS_DL - HYST_MEAS_DL2 and $P_{UL}$ is higher than P_IRAT_MEAS_UL + HYST_MEAS_UL1. When both $P_{DL}$ is higher than P_IRAT_MEAS_DL + HYST_MEAS_DL1, and $P_{UL}$ is lower than P_IRAT_MEAS_UL + HYST_MEAS_UL1, the transition/change F is activated. The transition/change G is activated when $P_{UL}$ is higher than P_IRAT_MEAS_UL + HYST_MEAS_UL1 and $P_{DL}$ is lower than P_IRAT_MEAS_DL + HYST_MEAS_DL1. The transition/change H is activated when $P_{UL}$ is higher than P_IRAT_MEAS_UL + HYST_MEAS_UL1 and $P_{DL}$ is lower than P_IRAT_MEAS_DL - HYST_MEAS_DL2. When $P_{UL}$ is higher than P_IRAT_MEAS_UL + HYST_MEAS_UL1 and $P_{DL}$ higher than P_IRAT_MEAS_DL + HYST_MEAS_DL1, then the transition/change I is activated. The transition/change J is activated when $P_{UL}$ is lower than P_IRAT_MEAS_UL - HYST_MEAS_UL2 and $P_{DL}$ is higher than P_IRAT_MEAS_DL + HYST_MEAS_DL1. The transition/change K is activated when $P_{UL}$ is higher than P_IRAT_HO__UL. The transitions/changes L and M imply failed inter-RAT handover. The transitions/change N is triggered by $P_{DL}$ being higher than P_IRAT_HO_DL. The transition/change O is activated by $P_{UL}$ being higher than P_IRAT_HO_UL and/or $P_{DL}$ higher than P_IRAT_HO_DL. Finally, the transition/change P implies failed inter-RAT handover.

The different with capitals indicated thresholds, such as P_IRAT_MEAS_UL and P_IRAT_MEAS_DL, and the hysteresis-values, such as HYST_MEAS_UL1, HYST_MEAS_UL2, HYST_MEAS_DL1 and HYST_MEAS_DL2, are algorithm parameters which can be configured to achieve best function.

Measurings

The 3GPP-specification TS25.331 includes the predefined measurings which shall be supported by the user equipment UE. The measurings can be given an own identity in form of an own unique identification number in the interval 1-16, and can in that way be distinguished from other measurings in progress, if any. Meaurings of the output power in uplink UL is initiated by a Measurement Control message for a UE Internal Measurement where it is indicated that UE Transmitted Power, that is the transmission/output power of the user equipment, shall be measured. Event-based triggering should be used. The predefined events are according to the standard:

Event6a: The UE output power exceeds specified threshold.
Event6b: The UE output power falls below specified threshold.
Event6c: The UE output power reaches its lowest possible value.
Event6d: The UE output power reaches its maximal value.

Table 1 is used when measurement values are reported by UE and when one indicates the thresholds for/of Event6a-d, which is taken from the specification TS25.133, Table 9.15. UE_TX_POWER stands for the transmission/output power of the user equipment in the network.

Table 1

| Reported value | Measured value | Unit |
|---|---|---|
| UE_TX_POWER_021 | $-50 \leq$ UE output $< -49$ | DBm |

(continued)

| Reported value | Measured value | Unit |
|---|---|---|
| UE_TX_POWER _022 | -49 ≤ UE output < -48 | dBm |
| UE_TX_POWER _023 | -48 ≤ UE output < -47 | dBm |
| ...etc. | ...etc. | ...etc. |
| UE_TX_POWER 102 | 31 ≤ UE output < 32 | dBm |
| UE_TX_POWER _103 | 32 ≤ UE output < 33 | dBm |
| UE_TX_POWER _104 | 33 ≤ UE output < 34 | dBm |

Inter-RAT measurings are initiated by a Measurement Control message for Inter-RAT measuring.

In the specification TS25.433 those measurements which the Radio Network Controller RNC can request from Node B are specified. To measure the output power of/on a dedicated channel, a Dedicated Measurement Initiation message is transmitted, where Measurement Type indicates Transmitted Code Power. Report Characteristics, is indicated as/to either:

EventA: $P_{DL}$ exceeds a threshold during a specified hysteresis period of time, that is the power in downlink exceeds a threshold value during a specified hysteresis period of time.

EventB: $P_{DL}$ falls below a threshold during a specified hysteresis period of time, that is the power in downlink falls short of a threshold value during a specified hysteresis period of time.

Further, a filtering constant in downlink, F_DL, shall be indicated. Also this is a free algorithm parameter. Both thresholds and measurement values for $P_{DL}$ are mapped according to Table 2 which is taken from the Specification TS25.133 Table 9.46.

Table 2

| Reported value | Measured value | Quantity |
|---|---|---|
| UTRAN_CODE_POWER _010 | -10.0 ≤ Transmitted code power < -9.5 | dBm |
| UTRAN_CODE_POWER _011 | -9.5 ≤ Transmitted code power < -9.0 | dBm |
| UTRAN_CODE_POWER _012 | -9.0 ≤ Transmitted code power < -8.5 | dBm |
| ... | ... | ... |
| UTRAN_CODE_POWER _120 | 45.0 ≤ Transmitted code power < 45.5 | dBm |
| UTRAN_CODE_POWER _121 | 45.5 ≤ Transmitted code power < 46.0 | dBm |
| UTRAM_CODE_POWER _122 | 46.0 ≤ Transmitted code power < 46.5 | dBm |

How threshold values and hysteresis values are calculated and when the are set will be described more in detail below.

Measurements in the state NO_IRAT_MEAS

A Measurement Control Message is transmitted to the user equipment UE with request for UE Internal measurements, which are triggered by Event6a, that is when the UE output power exceeds indicated threshold. The threshold value is indicated as/to P_IRAT_MEAS_UL+HYST_MEAS_UL1, which then is mapped according to Table 1 before it is transmitted to UE. The measure identity is set at/to $UL_{x}\_ID1$, where x is a number between 1 and 16, that is uplink identity 1.

Measurements in Node B are started with a Dedicated Measurement Initiation message with Report Characteristics, for EventA, where the threshold is set at/to P_IRAT_MEAS_DL + HYST_MEAS_DL1. The hysteresis timer is set at/to T_MEAS_DL1. The measure identity is set at/to DL_ID1, that is downlink identity 1.

When a measurement report comes from the user equipment UE about that Event6a, that is that the UE output power exceeds specified threshold, has occurred, transition/ change is made to the state IRAT_MEAS_UL, which corresponds to the transition/change A in Figure 1.

When a measurement report comes from Node B about that EventA, that is that the DL power exceeds specified threshold, has occurred, a transition/change is made to the state IRAT_MEAS_DL, which corresponds to the transition/ change C in Figure 1.

Measurements in the state IRAT_MEAS_UL

A new measurement of the type inter-RAT is started. The measurement is given the identification UL_ID2, that is uplink identity 2. No Reporting is requested. UTRAN quality measure is set at/to CPICH Ec/No and measuring of GSM RSSI is requested for the enclosed GSM neighbor cell list. The filtering of the UTRAN quality measure is determined by the algorithm parameter F_UTRAN_QUAL, whereas the filtering of GSM RSSI is indicated to/as F_GSM. The algorithm parameter GSM_BSIC_REQ (Y/N) decides if BSIC decoding is requested or not.

The measurement UL_ID1 is modified with/by a new Measurement Control message. Event6a shall be triggered at the threshold P_IRAT_HO, that is Event6b shall be triggered at the threshold P_IRAT_MEAS_UL-HYST_MEAS_UL2. The measurement UL_ID2 is indicated as Additional Measurements which shall be enclosed with the measurement report.

The measurements in downlink proceeds as before.

When a measurement report from the user equipment UE for Event6a is arriving, the algorithm changes into the state IRAT_HO, which corresponds to the transition/change K in Figure 1, if best measured GSM RSSI exceeds GSM_RXLEV_REQ. When a measurement report from the user equipment UE for Event6b, that is the UE output power falls short of indicated threshold, is arriving, a transition/change to the state NO_IRAT_MEAS is made. Unnecessary measurings are stopped/switched off.

When a measurement report is coming in from Node B for EventA, the algorithm changes to state IRAT_MEAS_UL/DL, which corresponds to the transition/change G in Figure 1.

If a measurement report from the user equipment UE for Event6b is coming in at the same time as a measurement report from Node B for EventA, transition/change is made to IRAT_MEAS_DL, which corresponds to the transition/change F in Figure 1.

In this state a terminal which does not have dual-receiver can apply Compressed Mode.

Measurements in the state IRAT_MEAS_DL

A new measurement of the type inter-RAT is started. The measurement is given the identification UL_ID3. The measurements are indicated either as Periodic, with the interval T_IRAT_MEAS_INTERVAL, or as event-controlled, depending on if an algorithm parameter IRAT_MEAS_DL_PERIODIC is set at/to Yes or No (Y/N). If the measurings shall be event-controlled, Event3a is indicated, with the thresholds MIN_UTRAN_QUAL for the UMTS quality, and GSM_RXLEV_REQ for the GSM threshold value. In both cases UTRAN quality measure is set at/to CPICH Ec/No and measuring of GSM RSSI is requested for the enclosed GSM neighbor cell list. The filtering of the UTRAN quality measure is decided by the algorithm parameter F_UTRAN_QUAL and W_QUAL, whereas the filtering of GSM RSSI is indicated to/as F_GSM. The algorithm parameter GSM_BSIC_REQ (Y/N) decides if BSIC decoding is requested or not.

The measurement UL_ID1 is modified with/by a new Measurement Control Message. Event6a, that is the UE output power exceeds indicated threshold, shall be triggered at the threshold P_IRAT_MEAS_UL+HYST_MEAS_UL3.

The measuring in Node B (DL_ID1) is modified. The threshold value for EventA, that is $P_{DL}$ exceeds a threshold during a specified hysteresis time, is set at/to P_IRAT_HO_DL instead. The threshold value for EventB, that is $P_{DL}$ falls short of a threshold during a specified hysteresis time, is set at/to P_IRAT_MEAS_DL-HYST_MEAS_DL2. If a measurement report is received from the user equipment UE for Event6a, transition/change is made to IRAT_MEAS_UL/DL, which corresponds to the transition/change I, in Figure 1.

If a measurement report from Node B for EventA is received and IRAT_MEAS_DL_PERIODIC = Y, that is if the measuring is periodic, a transition/change is made to IRAT_HO, which corresponds to the transition/change N in Figure 1, if best GSM RSSI > GSM_RXLEV_REQ in the most current measurement report.

If a measurement report from Node B for EventA is received and IRAT_MEAS_DL_PERIODIC = N, that is the measuring is not periodic, and no measurement report has been received for measuring UL_ID3, UL_ID3 is immediately modified to a periodic measuring. When the first measurement report for UL_ID3 is received, transition/change to IRAT_HO is made if best GSM RSSI > GSM_RXLEV_REQ.

If a measurement report from Node B for EventA is received and IRAT_MEAS_DL_PERIODIC = N, that is the measuring is not periodic, and a measurement report for UL_ID3 has been received less than T_GSM_VALID seconds ago, transition/change then is made to IRAT_HO if best GSM RSSI > GSM_RXLEV_REQ.

If a measurement report from Node B for EventA is received and IRAT_MEAS_DL_PERIODIC = N, that is the measuring is not periodic, and no measurement report for UL_ID3 has been received within T_GSM_VALID seconds, UL_ID3 is immediately modified to a periodic measuring. When the first measurement report for UL_ID3 is received, transition/change is made to IRAT_HO if best GSM RSSI > GSM_RXLEV_REQ.

If a measurement report for Event3a is received from the user equipment UE, this is saved at least T_GSM_VALID seconds. During this time the measuring is stopped/switched off, to be switched on/started again after that.

If a measurement report from the user equipment UE for Event6a is coming in at the same time as a measurement report from Node B for EventB, transition/change is made to IRAT_MEAS_UL, which corresponds to the transition/change E in Figure 1.

If a measurement report from Node B for EventB is received, a transition/change is made to NO_IRAT_MEAS, which corresponds to the transition/change D in Figure 1. Unnecessary measurings are switched off/stopped.

In this state a terminal which does not have dual-receiver can apply Compressed Mode.

Measurements in the state IRAT_MEAS_UL/DL

If IRAT_MEAS_DL_PERIODIC = N, that is the measuring is not periodic, a new UE measurement of the type inter-RAT is started. The measuring is given the identity UL_ID2. No Reporting is requested. UTRAN quality measure is set at/to CPICH Ec/No and measuring of GSM RSSI is requested for the enclosed GSM neighbor cell list. The filtering of the UTRAN quality measure is determined by the algorithm parameter F_UTRAN_QUAL, whereas the filtering of GSM RSSI is indicated to/as F_GSM. The algorithm parameter GSM_BSIC_REQ (Y/N, Y stands for Yes and N stands for No) decides whether BSIC decoding is requested or not.

The measurement UL_ID1 is started/modified with/by a new Measurement Control message. Event6a shall be triggered at the threshold P_IRAT_HO. Event6b shall be triggered at the threshold P_IRAT_MEAS_UL-HYST_MEAS_UL2. If IRAT_MEAS_DL_PERIODIC = N, that is the measuring is not periodic, the measuring UL_ID2 is indicated as Additional Measurements which shall be enclosed with the measurement report.

A new measuring of the type inter-RAT is started. The measuring is given the identification UL_ID3. The measurings are indicated either as Periodic, with the interval T_IRAT_MEAS_INTERVAL, or as event-controlled, depending on the algorithm parameter IRAT_MEAS_DL_PERIODIC (Y/N, Y stands for Yes and N stands for No). If the measurings shall be event-controlled, Event3a is indicated, with the thresholds MIN_UTRAN_QUAL for the UMTS quality and GSM_RXLEV_REQ for the GSM threshold value. In both cases UTRAN quality measure is set at/to CPICH Ec/No and measuring of GSM RSSI is requested for the enclosed GSM neighbor cell list. The filtering of UTRAN quality measure is determined by the algorithm parameter F_UTRAN_QUAL and W_QUAL, whereas the filtering of GSM RSSI is indicated to/as F_GSM. the algorithm parameter GSM_BSIC_REQ (Y/N) decides if BSIC decoding is requested or not.

The measuring in Node B DL_ID1 is modified if required. The threshold value for EventA is set at/to P_IRAT_HO_DL. The threshold value for EventB is set to/at P_IRAT_MEAS_DL-HYST_MEAS_DL2.

When a measurement report from the user equipment UE for Event6a is coming in, the algorithm changes to the state IRAT_HO if best measured GSM RSSI exceeds GSM_RXLEV_REQ.

When a measurement report from the user equipment UE for Event6b is coming in, transition/change is made to state IRAT_MEAS_DL. Unnecessary measurings are stopped/switched off.

If a measurement report from Node B for EventA is received and IRAT_MEAS_DL_PERIODIC = Y, a transition/change is made to IRAT_HO if best GSM RSSI > GSM_RXLEV_REQ in the most current measurement report.

If a measurement report from Node B for EventA is received and IRAT_MEAS_DL_PERIODIC = N and no measurement report has been received for measurement UL_ID3, UL_ID3 is immediately modified to a periodic measuring. When the first measurement report for UL_ID3 is received, transition/change to IRAT_HO is made if best GSM RSSI > GSM_RXLEV_REQ.

If a measurement report from Node B for EventA is received and IRAT_MEAS_DL_PERIODIC = N and a measurement report for UL_ID3 has been received less than T_GSM_VALID seconds ago, transition/change is made to IRAT_HO if best GSM RSSI > GSM_RXLEV_REQ.

If a measurement report from Node B for EventA is received and IRAT_MEAS_DL_PERIODIC = N and no measurement report for UL_ID3 has been received within T_GSM_VALID seconds, UL_ID3 is immediately modified to a periodic measuring. When the first measurement report for UL_ID3 is received, transition/change is made to IRAT_HO if best GSM RSSI > GSM_RXLEV_REQ.

If a measurement report for Event3a is received from the user equipment UE, this is saved at least T_GSM_VALID seconds. During this time the measuring is stopped/switched off, to be switched on/started again after that.

If a measurement report from Node B for EventB is received, a transition/change is made to IRAT_MEAS_UL, which corresponds to the transition/change H in Figure 1. Unnecessary measurings are stopped/ switched off.

In this state a terminal which does not have dual-receiver can apply Compressed Mode.

IRAT_HO

In the IRAT-HO state the Radio Network Controller RNC communicates with the Base Station Controller BSC to reserve resources for the connection. If this succeeds, a HANDOVER FROM UTRAN COMMAND is transmitted to the user equipment UE. The user equipment UE after that follows the standardized procedure. If the user equipment UE for some reason does not succeed in getting contact with the GSM-network, and a handover by that is not possible, it will return after a timer has expired. If the handover for some of the above mentioned reasons fail, the algorithm transition/changes to the previous state.

Threshold values and power

The threshold values for PDL, that is P_IRAT_MEAS_DL and P_IRAT_HO_DL, can be calculated from other parameter values such as P_MAX_DPCH_DL and M_IRAT_MEAS_DL as well as M_IRAT_HO_DL which provide the threshold values according to the formulas below:

$$P\_IRAT\_MEAS\_DL = PO3 \cdot \frac{N_{pilot} + N_{TFCI} + N_{TPC} + N_{data}}{N_{pilot}PO3 + N_{TFCI}PO1 + N_{TPC}PO2 + N_{data}} \cdot \frac{P\_MAX\_DPCH\_DL}{M\_IRAT\_MEAS\_DL}$$

$$P\_IRAT\_HO\_DL = PO3 \cdot \frac{N_{pilot} + N_{TFCI} + N_{TPC} + N_{data}}{N_{pilot}PO3 + N_{TFCI}PO1 + N_{TPC}PO2 + N_{data}} \cdot \frac{P\_MAX\_DPCH\_DL}{M\_IRAT\_HO\_DL}$$

The power is measured in linear scale (mW). The threshold values then shall be converted into dBm and mapped together with applicable hysteresis according to Table 2. PO1 PO2, PO3 are offsets defined in the Specification TS25.214 and $N_{pilot}$ is the number of pilot bits per slot, $N_{TFCI}$ is the number of Transport Format Combination Indicator bits per slot, $N_{TPC}$ is the number of power control bits per slot, and $N_{data}$ is the number of coded, interleaved and rate-matched data bits per slot. Allowed values of $N_{TPC}$, $N_{TFCI}$, $Np_{ilot}$ and $N_{data}$ are given by Table 11 in the Specification TS25.211.

Figure 2 shows $N_{TPC}$, $N_{TFCI}$, $Np_{ilot}$ and $N_{data}$. Notice that $N_{data} = N_{data}+N_{data2}$. The Figure is derived from the Specification TS25.211.

For the threshold values in uplink, the Radio Network Controller RNC shall use the parameters M_IRAT__MEAS_UL and M_IRAT_HO_UL together with the maximally allowed UE output power in the network, here called UL_MAX_TX_PWR, and UEs maximally available output power $P^{max}_{UE}$, which is given by "power class" according to Table 3. UL_MAX_TX_PWR is a network parameter which is broadcast in all cells and the power class of the terminal also is available for the Radio Network Controller RNC. If information about these parameters for some reason is lacking, the parameter P_MAX_UL shall be used instead.

The threshold values are given by:

$$P\_IRAT\_MEAS\_UL = \frac{\min\left(UL\_MAX\_TX\_PWR, P^{max}_{UE}\right)}{M\_IRAT\_MEAS\_UL}$$

$$P\_IRAT\_HO\_UL = \frac{\min\left(UL\_MAX\_TX\_PWR, P^{max}_{UE}\right)}{M\_IRAT\_HO\_UL}$$

alternatively by:

$$P\_IRAT\_MEAS\_UL = \frac{P\_MAX\_UL}{M\_IRAT\_MEAS\_UL}$$

$$P\_IRAT\_HO\_UL = \frac{P\_MAX\_UL}{M\_IRAT\_HO\_UL}\ .$$

All power and thresholds are in linear scale (mW) in the formulas above. They shall be translated into dBm and mapped together with applicable hysteresis according to Table 1.

Table 3

| Power class | Nominal max. output | Tolerance |
|---|---|---|
| 1 | +33 dBm | +1/-3 dB |
| 2 | +27 dBm | +1/-3 dB |
| 3 | +24 dBm | +1/-3 dB |
| 4 | +21 dBm | $\pm$ 2 dB |

In Table 3 the output power of the terminal, depending on power class, is shown. The Table is taken from the Specification TS25.101.

The present invention also relates to a computer program product including program code elements which, when they are executed in a computerized unit, are arranged to execute one or more steps of the handover, according to the invention, from a UMTS radio network to a GSM radio network.

**Claims**

1. Procedure for handover from a UMTS radio network to a GSM radio network, including the steps to;

   - for each connection between a user equipment (UE) and a base station (Node B) in the UMTS radio network initiate a state model including a start state (NO_IRAT_MEAS), an uplink state (IRAT_MEAS_UL), a downlink state (IRAT_MEAS_DL), an up-/downlink state (IRAT_MEAS_UL/DL), and a handover state (IRAT_HO),
   - in the start state execute power measurements and change to the uplink state (A) if the power of the user equipment exceeds a threshold value, or to the downlink state (C) if the power of the base station exceeds a threshold value,
   - in the uplink state or in the downlink state execute a new power measurement and threshold check for the user equipment respective base station, and check if received signal strength in a GSM neighbor cell list exceeds a threshold value, and from there

     a) either go to the handover state (K,N) if both measured output power and received signal strength exceeds respective threshold value, or
     b) go to the up-/downlink state if measurement report is coming in, in the uplink state, that the output power of the base station exceeds its threshold value (G), or if measurement report is coming in, in the downlink state (I) that the output power of the user equipment exceeds its threshold value,

   - in the uplink-/downlink state execute new power measurements and threshold check for the user equipment and base station, and check if received signal strength in a GSM neighbor cell list exceeds a threshold value, and if all threshold values are exceeded, go to the handover state (O),
   - in the handover state a Radio Network Controller (RNC) communicates with a Base Station Controller (BSC) to reserve resources for a connection, and if this succeeds, transmit a HANDOVER FROM UTRAN COMMAND to the user equipment to execute handover, and if the user equipment fails to get into contact with the GSM network, and a handover by that is not possible, the procedure will proceed in the state in the state model that preceded the handover state (L,M,P).

2. Procedure as claimed in patent claim 1, at which measurements in the start state NO_IRAT_MEAS include the steps that a Measurement Control message is transmitted to the user equipment (UE) with request for UE Internal measurements of the output power, which are triggered by Event6a, that is triggered when the UE output power exceeds a threshold value set at/to P_IRAT_MEAS_UL+HYST_MEAS_UL1.

3. Procedure as claimed in patent claim 2, further including the step that, when a measurement report is coming in from the user equipment (UE) about that Event6a has occurred, that is that the UE output power exceeds specified threshold value, a transition/change A is made to the uplink state IRAT_MEAS_UL.

4. Procedure as claimed in patent claim 1, at which measurements in the start state NO_IRAT_MEAS include the steps that a measuring of the downlink power at/on indicated code in the base station (Node B) is started with/by a Dedicated Measurement Initiation message with Report Characteristics for EventA where the threshold value is set at/to P_IRAT_MEAS_DL + HYST_MEAS_DL1.

5. Procedure as claimed in patent claim 4, further including the step that when a measurement report comes from the base station (Node B) about that EventA has occurred, that is that the DL power exceeds specified threshold value, a transition/change C is made to the downlink state IRAT_MEAS_DL.

6. Procedure as claimed in patent claim 1 or 3, at which measurements in the uplink state NO_IRAT_UL include the step that:

   - a new measurement of the type inter-RAT is started;
   - the measurement is given the identification UL_ID2;
   - UTRAN quality measure is set at/to CPICH Ec/No and measuring of GSM RSSI is requested for the enclosed GSM neighbor cell list;
   - the filtering of the UTRAN quality measure is determined by the algorithm parameter F_UTRAN_QUAL, whereas the filtering of GSM RSSI is indicated to/as F_GSM.
   - the algorithm parameter GSM_BSIC_REQ decides if BSIC decoding is requested or not.

7. Procedure as claimed in patent claim 6, further including steps that the measurement UL_ID1 is modified with/by a new Measurement Control message; that Event6a shall be triggered at a threshold P_IRAT_HO; and that Event6b shall be triggered at the threehold P_IRAT_MEAS_UL - HYST_MEAS_UL2.

8. Procedure as claimed in patent claim 7, further including that when a measurement report from the user equipment (UE) for Event 6a is coming in, a transition/ change K is made to the handover state IRAT_HO if best measured GSM RSSI exceeds GSM_RXLEV_REQ.

9. Procedure as claimed in any of the patent claims 6-8, further including the step that when a measurement report from the user equipment (UE) for Event 6b is coming in, that is the UE output power falls below specified threshold, a transition/change B is made to the start state NO_IRAT_MEAS.

10. Procedure as claimed in any of the patent claims 6-9, further including the step that when a measurement report is coming in from the base station (Node B) for EventA, transition/change G is made to the up-/downlink state IRAT_MEAS_UL/DL.

11. Procedure as claimed in any of the patent claims 6-10, further including the step that when a measurement report from the user equipment (UE) for Event 6b is coming in at the same time as a measurement report from the base station (Node B) for EventA, transition/change F is made to the downlink state IRAT_MEAS_DL.

12. Procedure as claimed in any of the patent claims 1, 4 or 11, at which measurements in the downlink state IRAT_MEAS_DL include the steps that:

   - a new measurement of the type inter-RAT is started;
   - the measurement is given the identification UL_ID3;
   - the measurements are indicated either as periodic or as event-controlled;
   - if the measurings shall be event-controlled, Event3a is indicated, with the thresholds MIN_UTRAN_QUAL for the UMTS-quality, and GSM_RXLEV_REQ for the GSM threshold value;
   - UTRAN quality measure is set at/to CPICH Ec/No, and measurement of GSM RSSI is requested for the enclosed GSM neighbor cell list;

- the filtering of the UTRAN quality measure is determined by the algorithm parameter F_UTRAN_QUAL and W_QUAL, whereas the filtering of GSM RSSI is indicated to/as F_GSM;
- the algorithm parameter GSM_BSIC_REQ decides if BSIC decoding is requested or not.

**13.** Procedure as claimed in patent claim 12, further including the steps that the measurement UL_ID1 is modified with/by a new Measurement Control message, and that Event6a, that is the UE power exceeds a specified threshold value, shall be triggered at the threshold P_IRAT_MEAS_UL + HYST_MEAS_UL3.

**14.** Procedure as claimed in any of the patent claims 12-13, further including the step that if a measurement report is received from the user equipment (UE) for Event6a, a transition/change I is made to the up-/downlink state IRAT_MEAS_UL/DL.

**15.** Procedure as claimed in any of the patent claims 12-14 further including the steps that the measurement in the base station (Node B) is modified; that the threshold value for EventA, that is $P_{DL}$ exceeds a threshold during a specified time of hysteresis, is set at/to P_IRAT_HO_DL; and that the threshold value for EventB, that is $P_{DL}$ falls below a threshold during a specified time of hysteresis, is set at/to P_IRAT_MEAS_DL-HYST_MEAS_DL2.

**16.** Procedure as claimed in patent claim 15, further including the step that if a measurement report from the base station (Node B) for EventA is received and if the measurement is periodic, a transition/change N is made to the handover state IRAT_HO, if best GSM RSSI > GSM_RXLEV_REQ in the most current measurement report.

**17.** Procedure as claimed in patent claim 15, further including the step that if a measurement report from the base station (Node B) for EventA is received, and if the measurement is not periodic, and if no measurement report has been received for measuring UL_ID3, UL_ID3 is immediately modified to a periodic measuring; and when the first measurement report for UL_ID3 is received, transition/change is made to the handover state IRAT_HO if best GSM RSSI > GSM_RXLEV_REQ.

**18.** Procedure as claimed in patent claim 15, further including the step that if a measurement report from the base station (Node B) for EventA is received and if the measurement is not periodic, and if a measurement report for UL_ID3 has been received less than T_GSM_VALID seconds ago, transition/change is made to the handover state IRAT_HO if best GSM RSSI > GSM_RXLEV_REQ.

**19.** Procedure as claimed in patent claim 15, further including the step that if a measurement report from the base station (Node B) for EventA is received, and if the measurement is not periodic, and no measurement report for UL_ID3 has been received within T_GSM_VALID seconds, UL_ID3 is immediately modified to a periodic measuring, and when the first measurement report for UL_ID3 is received, transition/change is made to the handover state IRAT_HOif best GSM_RSSI > GSM_RXLEV_REQ.

**20.** Procedure as claimed in any of the patent claims 12 -19, further including the step that, if a measurement report for Event3a is received from the user equipment (UE), this is saved at least T_GSM_VALID seconds.

**21.** Procedure as claimed in any of the patent claims 12 -20, further including the step that if a measurement report from the user equipment (UE) for Event6a is coming in at the same time as a measurement report from the base station (Node B) for EventB, transition/change E is made to the uplink state IRAT_MEAS_UL.

**22.** Procedure as claimed in any of the patent claims 12 -21, at which, if a measurement report from the base station (Node B) for EventB is received, a transition/ change D is made to the start state NO_IRAT_MEAS.

**23.** Procedure as claimed in patent claim 1, 10 or 14, at which measurements in the up-/downlink state IRAT._MEAS_UL/DL include the steps that:

- if the measurement is not periodic, start a new measuring on the user equipment (UE) which is of the type inter-RAT;
- the measuring is given the identity UL_ID2;
- UTRAN quality measure is set at/to CPICH Ec/No and measuring of GSM RSSI is requested for the enclosed GSM neighbor cell list;
- the filtering of the UTRAN quality measure is determined by the algorithm parameter F_UTRAN_QUAL, whereas the filtering of GSM RSSI is indicated to/as F_GSM;

- the algorithm parameter GSM_BSIC_REQ decides if BSIC decoding is requested or not.

24. Procedure as claimed in patent claim 23, further including the steps that the measuring UL_ID1 is started/ modified with/by a new Measurement Control message; that Event6a shall be triggered at the threshold P_IRAT_HO; and that Event6b shall be triggered at the threshold P_IRAT_MEAS_UL - HYST_MEAS_UL2.

25. Procedure as claimed in patent claim 23 or 24, further including the steps to:

- start a new measuring of the type inter-RAT;
- give the measuring the identification UL_ID3;
- indicate the measurings as either periodic or as event-controlled;
- if the measurings shall be event-controlled, Event3a is indicated, with the thresholds MIN_UTRAN_QUAL for the UMTS-quality, and GSM_RXLEV_REQ for the GSM threshold value;
- set UTRAN quality measure to/at CPICH Ec/No and request measuring of GSM RSSI for the enclosed GSM neighbor cell list;
- determine the filtering of the UTRAN quality measure by means of the algorithm parameter F_UTRAN_QUAL and W_QUAL, and indicate the filtering of GSM RSSI to/as F-GSM; and
- the algorithm parameter GSM_BSIC_REQ decides if BSIC decoding is requested or not.

26. Procedure as claimed in patent claim 25, further including the step that the threshold value of/for EventA is set at/to P_IRAT_HO_DL and that the threshold value of/for eventB is set at/to P_IRAT_MEAS_DL-HYST_MEAS_DL2.

27. Procedure as claimed in any of the patent claims 23-26, further including the step that, when a measurement report from the user equipment (UE) for Event6a comes in, transition/change O occurs to the handover state IRAT_HO if best measured GSM RSSI exceeds GSM_RXLEV_REQ.

28. Procedure as claimed in any of the patent claims 23-26, further including the step that when a measurement report from the user equipment (UE) for Event6b comes in, transition/change J is made to the downlink state IRAT_MEAS_DL.

29. Procedure as claimed in any of the patent claims 23-28, further including the step that when a measurement report from the base station (Node B) for EventA is received, and the measuring is periodic, a transition/change O is made to the handover state IRAT_HO if best GSM RSSI > GSM_RXLEV_REQ.

30. Procedure as claimed in any of the patent claims 23-28, further including the step that when a measurement report from the base station (Node B) for EventA is received, and if the measuring is not periodic, and no measurement report has been received for measurement UL_ID3, UL_ID3 is immediately modified to a periodic measuring, and when the first measurement report for UL_ID3 is received, transition/change O is made to the handover state IRAT_HOif best GSM RSSI > GSM_RXLEV_REQ.

31. Procedure as claimed in any of the patent claims 23-28, further including the step that when a measurement report from the base station (Node B) for EventA is received and the measuring is not periodic, and a measurement report for UL_ID3 has been received less than T_GSM_VALID seconds ago, transition/change O is made to the handover state IRAT_HO if best GSM RSSI > GSM_RXLEV_REQ.

32. Procedure as claimed in any of the patent claims 23-28, further including the step that when a measurement report from the base station (Node B) for EventA is received, and the measuring is not periodic, and no measurement report for UL_ID3 has been received within T_GSM_VALID seconds, UL_ID3 is immediately modified to a periodic measuring, and when the first measurement report for UL_ID3 is received, transition/change O is made to the handover state IRAT_HOif best GSM RSSI > GSM_RXLEV_REQ.

33. Procedure as claimed in any of the patent claims 23-28, further including the step that when a measurement report from the base station (Node B) for EventB is received, a transition/change H is made to the uplink state IRAT_MEAS_UL.

34. A computer program product including program code elements which, when they are executed in a computerized unit, are arranged to execute the steps according to any of the previous patent claims.

**Patentansprüche**

1. Prozedur für ein Handover von einem UMTS-Funknetzwerk zu einem GSM-Funknetzwerk, enthaltend die Schritte zum:

   - für jede Verbindung zwischen einem Benutzergerät (UE) und einer Basisstation (Knoten B) im UMTS-Funknetzwerk, Einleiten eines Zustandsmodells, enthaltend einen Startzustand (NO_IRAT_MEAS), einen Aufwärtsstreckenzustand (IRAT_MEAS_UL), einen Abwärtsstreckenzustand (IRAT MEASS DL), einen Aufwärtsstrecken-/Abwärtsstreckenzustand (IRAT_MEAS_UL/DL) und einen Handover-Zustand (IRAT_HO),
   - im Startzustand Ausführen von Strommessungen und Wechseln zum Aufwärtsstreckenzustand (A), falls der Strom des Benutzergeräts einen Schwellenwert überschreitet, oder zum Abwärtsstreckenzustand (C), falls der Strom der Basisstation einen Schwellenwert überschreitet,
   - im Aufwärtsstreckenzustand oder im Abwärtsstreckenzustand Ausführen einer neuen Strommessung und einer Schwellenwertkontrolle für das Benutzergerät beziehungsweise die Basisstation, und Kontrollieren, ob eine empfangene Signalstärke in einer GSM-Nachbarzellenliste einen Schwellenwert überschreitet, und von da an

      a) entweder Übergehen zum Handover-Zustand (K, N), falls sowohl der gemessene Ausgangsstrom wie auch die empfangene Signalstärke einen jeweiligen Schwellenwert überschreiten, oder
      b) Übergehen zum Aufwärtsstrecken-/Abwärtsstreckenzustand, falls im Aufwärtsstreckenzustand ein Messungsbericht einlangt, dass der Ausgangsstrom der Basisstation seinen Schwellenwert (G) überschreitet, oder falls im Abwärtsstreckenzustand (I) ein Messungsbericht einlangt, dass der Ausgangsstrom des Benutzergeräts seinen Schwellenwert überschreitet,

   - Ausführen, im Aufwärtsstrecken-/Abwärtsstreckenzustand, neuer Strommessungen und einer Schwellenwertkontrolle für das Benutzergerät und die Basisstation, und Kontrollieren, ob eine empfangene Signalstärke in einer GSM-Nachbarzellenliste einen Schwellenwert überschreitet, und falls alle Schwellenwerte überschritten sind, Übergehen zum Handover-Zustand (0),
   - Kommunizieren, im Handover-Zustand, einer Funknetzwerksteuerung (RNC) mit einer Basisstationssteuerung (BSC), um Ressourcen für eine Verbindung zu reservieren, und falls dies erfolgreich ist, Übertragen eines HANDOVER FROM UTRAN COMMAND an das Benutzergerät, um ein Handover auszuführen, und falls das Benutzergerät nicht imstande ist, mit dem GSM-Netzwerk in Kontakt zu treten und ein Handover dadurch nicht möglich ist, Fortfahren mit der Prozedur in dem Zustand im Zustandsmodell, welcher dem Handover-Zustand (L, M, P) vorangeht.

2. Prozedur nach Patentanspruch 1, bei welcher Messungen im Startzustand NO_IRAT_MEAS die Schritte enthalten, dass eine Messungssteuernachricht an das Benutzergerät (UE) mit einer Anfrage für UE interne Messungen des Ausgabestroms übertragen wird, welche durch Ereignis6a ausgelöst sind, welches ausgelöst ist, wenn der UE-Ausgangsstrom einen Schwellenwert, gesetzt bei/auf P_IRAT_MEAS_UL+HYST_MEAS_UL1, überschreitet.

3. Prozedur nach Patentanspruch 2, des Weiteren enthaltend den Schritt, dass, wenn ein Messungsbericht bezüglich eines Eintretens von Ereignis6a vom Benutzergerät (UE) einlangt, welches ist, dass der UE-Ausgangsstrom einen bestimmten Schwellenwert überschreitet, ein Übergang/Wechsel A in den Aufwärtsstreckenzustand IRAT_MEAS_UL erfolgt.

4. Prozedur nach Patentanspruch 1, bei welcher Messungen im Startzustand NO_IRAT_MEAS die Schritte enthalten, dass ein Messen des Abwärtsstreckenstroms bei/auf einem angezeigten Code in der Basisstation (Knoten B) mit/durch eine dedizierte Messungseinleitungsnachricht mit Berichtseigenschaften für EreignisA gestartet wird, wobei der Schwellenwert bei/auf P_IRAT_MEAS_DL + HYST_MEAS_DL1 gesetzt.

5. Prozedur nach Patentanspruch 4, des Weiteren enthaltend den Schritt, dass, wenn ein Messungsbericht bezüglich eines Eintretens von Ereignis6a von der Basisstation (Knoten B) einlangt, welches ist, dass der DL-Strom einen bestimmten Schwellenwert überschreitet, ein Übergang/Wechsel C in den Abwärtsstreckenzustand IRAT_MEAS_DLerfolgt.

6. Prozedur nach dem Patentanspruch 1 oder 3, bei welcher Messungen im Aufwärtsstreckenzustand NO_IRAT_UL den Schritt enthalten, dass:

- eine neue Messung des inter-RAT-Typs gestartet wird;
- der Messung die Identifikation UL_ID2 verliehen wird;
- ein UTRAN-Qualitätsmaß bei/auf CPICH Ec/No gesetzt ist und Messen von GSM RSSI für die beigefügte GSM-Nachbarzellenliste angefragt ist;
- das Filtern des UTRAN-Qualitätsmaßes durch den Algorithmusparameter F_UTRAN_QUAL bestimmt wird, wohingegen das Filtern von GSM RSSI zu/als F_GSM angezeigt ist;
- der Algorithmusparameter GSM_BSIC_REQ entscheidet, ob eine BSIC-Decodierung angefragt wird oder nicht.

7. Prozedur nach Patentanspruch 6, des Weiteren enthaltend Schritte, dass die Messung UL_ID1 mit/durch eine neue Messungssteuernachricht modifiziert ist; dass Ereignis6a bei einem Schwellenwert P_IRAT_HO ausgelöst werden soll; und dass Ereignis6b bei dem Schwellenwert P_IRAT_MEAS_UL - HYST_MEAS_UL2 ausgelöst werden soll.

8. Prozedur nach Patentanspruch 7, des Weiteren enthaltend, dass, wenn ein Messungsbericht von dem Benutzergerät (UE) für Ereignis 6a einlangt, ein Übergang/Wechsel K zum Handover-Zustand IRAT_HO erfolgt, falls ein bester gemessener GSM RSSI GSM_RXLEV_REQ überschreitet.

9. Prozedur nach einem der Patentansprüche 6 - 8, des Weiteren enthaltend den Schritt, dass, wenn ein Messungsbericht vom Benutzergerät (UE) für Ereignis 6b einlangt, welches ist, dass der UE-Ausgangsstrom unter einen bestimmten Schwellenwert fällt, ein Übergang/Wechsel B zum Startzustand NO_IRAT_MEAS erfolgt.

10. Prozedur nach einem der Patentansprüche 6 - 9, des Weiteren enthaltend den Schritt, dass, wenn ein Messungsbericht von der Basisstation (Knoten B) für EreignisA einlangt, ein Übergang/Wechsel G zum Aufwärts-/Abwärtsstreckenzustand IRAT_MEAS_UL/DL erfolgt.

11. Prozedur nach einem der Patentansprüche 6 - 10, des Weiteren enthaltend den Schritt, dass, wenn ein Messungsbericht vom Benutzergerät (UE) für Ereignis 6b zur selben Zeit einlangt wie ein Messungsbericht von der Basisstation (Knoten B) für EreignisA, ein Übergang/Wechsel F in den Abwärtsstreckenzustand IRAT_MEAS_DLerfolgt.

12. Prozedur nach einem der Patentansprüche 1, 4 oder 11, bei welcher Messungen im Abwärtsstreckenzustand IRAT_MEAS_DLdie Schritte enthalten, dass:

- eine neue Messung vom Typ inter-RAT gestartet wird;
- der Messung die Identifikation UL_ID3 verliehen wird;
- die Messungen entweder als periodisch oder ereignisgesteuert angezeigt sind;
- falls die Messungen ereignisgesteuert sein sollen, Ereignis3a angezeigt ist, mit den Schwellwerten MIN_UTRAN_QUAL für die UMTS-Qualität und GSM_RXLEV_REQ für den GSM-Schwellenwert;
- das UTRAN-Qualitätsmaß bei/auf CPICH Ec/No gesetzt ist, und eine Messung von GSM RSSI für die beigefügte GSM-Nachbarzellenliste angefragt ist;
- das Filtern des UTRAN Qualitätsmaßes durch den Algorithmusparameter F_UTRAN_QUAL und W_QUAL bestimmt wird, wohingegen das Filtern von GSM RSSI zu/als F_GSM angezeigt ist;
- der Algorithmusparameter GSM_BSIC_REQ entscheidet, ob eine BSIC-Decodierung angefragt wird oder nicht.

13. Prozedur nach Patentanspruch 12, des Weiteren enthaltend die Schritte, dass die Messung UL_ID1 mit/durch eine neue Messungssteuernachricht modifiziert ist, und dass Ereignis6a, welches ist, dass der UE-Strom einen bestimmten Schwellenwert überschreitet, bei dem Schwellenwert P_IRAT_MEAS_UL + HYST_MEAS_UL3 ausgelöst werden soll.

14. Prozedur nach einem der Patentansprüche 12 - 13, des Weiteren enthaltend den Schritt, dass, falls ein Messungsbericht vom Benutzergerät (UE) für Ereignis6a empfangen wird, ein Übergang/Wechsel I in den Aufwärts-/Abwärtsstreckenzustand IRAT_MEASS_UL/DL erfolgt.

15. Prozedur nach einem der Patentansprüche 12 - 14, des Weiteren enthaltend die Schritte, dass die Messung in der Basisstation (Knoten B) modifiziert ist; dass der Schwellenwert für EreignisA, welches ist, dass $P_{DL}$ einen Schwellenwert während einer bestimmten Hysteresezeit überschreitet, bei/auf P_IRAT_HO_DL gesetzt ist; und dass der Schwellenwert für EreignisB, welches ist, dass $P_{DL}$ während einer bestimmten Hysteresezeit unter einen Schwellenwert fällt, bei/auf P_IRAT_MEAS_DL-HYST_MEAS_DL2 gesetzt ist.

16. Prozedur nach Patentanspruch 15, des Weiteren enthaltend den Schritt, dass, falls ein Messungsbericht von der Basisstation (Knoten B) für EreignisA empfangen wird und falls die Messung periodisch ist, ein Übergang/Wechsel N in den Handover-Zustand IRAT_HOerfolgt, falls im aktuellsten Messungsbericht beste GSM RSSI > GSM_RXLEV_REQ ist.

**17.** Prozedur nach Patentanspruch 15, des Weiteren enthaltend den Schritt, dass, falls ein Messungsbericht von der Basisstation (Knoten B) für EreignisA empfangen wird und falls die Messung nicht periodisch ist und falls kein Messungsbericht zum Messen von UL_ID3 empfangen wurde, UL_ID3 unmittelbar auf ein periodisches Messen modifiziert wird; und wenn der erste Messungsbericht für UL_ID3 empfangen ist, ein Übergang/Wechsel in den Handover-Zustand IRAT_HO erfolgt, falls beste GSM RSSI > GSM_RXLEV_REQ.

**18.** Prozedur nach Patentanspruch 15, des Weiteren enthaltend den Schritt, dass, falls ein Messungsbericht von der Basisstation (Knoten B) für EreignisA empfangen wird und falls die Messung nicht periodisch ist und falls ein Messungsbericht für UL_ID3 vor weniger als T_GSM_VALID Sekunden empfangen wurde, ein Übergang/Wechsel in den Handover-Zustand IRAT_HOerfolgt, falls beste GSM RSSI > GSM_RXLEV_REQ.

**19.** Prozedur nach Patentanspruch 15, des Weiteren enthaltend den Schritt, dass, falls ein Messungsbericht von der Basisstation (Knoten B) für EreignisA empfangen wird und falls die Messung nicht periodisch ist und kein Messungsbericht für UL_ID3 innerhalb von T_GSM_VALID Sekunden empfangen wurde, UL_ID3 unmittelbar zu einem periodischen Messen modifiziert wird, und wenn der erste Messungsbericht für UL_ID3 empfangen wird, ein Übergang/Wechsel in den Handover-Zustand IRAT_HOerfolgt, falls beste GSM_RSSI > GSM_RXLEV_REQ.

**20.** Prozedur nach einem der Patentansprüche 12 - 19, des Weiteren enthaltend den Schritt, dass, falls ein Messungsbericht für Ereignis3a vom Benutzergerät (UE) empfangen wird, dieser zumindest T_GSM_VALID Sekunden gespeichert wird.

**21.** Prozedur nach einem der Patentansprüche 12 - 20, des Weiteren enthaltend den Schritt, dass, falls ein Messungsbericht vom Benutzergerät (UE) für Ereignis6a zur selben Zeit einlangt wie ein Messungsbericht von der Basisstation (Knoten B) für EreignisB, ein Übergang/Wechsel E in den Aufwärtsstreckenzustand IRAT_MEAS_UL erfolgt.

**22.** Prozedur nach einem der Patentansprüche 12 - 21, bei welcher, falls ein Messungsbericht von der Basisstation (Knoten B) für EreignisB empfangen wird, ein Übergang/Wechsel D in den Startzustand NO_IRAT_MEAS erfolgt.

**23.** Prozedur nach Patentanspruch 1, 10 oder 14, bei welcher Messungen im Aufwärts-/Abwärtsstreckenzustand IRAT_MEAS_UL/DL die Schritte enthalten, dass:

- falls die Messung nicht periodisch ist, eine neue Messung an dem Benutzergerät (UE), welche vom Typ inter-RAT ist, gestartet wird;
- der Messung die Identifikation UL_ID2 verliehen wird;
- das UTRAN-Qualitätsmaß bei/auf CPICH Ec/No gesetzt ist und eine Messung von GSM RSSI für die beigefügte GSM-Nachbarzellenliste angefragt wird;
- das Filtern des UTRAN-Qualitätsmaßes durch den Algorithmusparameter F_UTRAN_QUAL bestimmt wird, wohingegen das Filtern von GSM RSSI zu/als F_GSM angezeigt ist;
- der Algorithmusparameter GSM_BSIC_REQ entscheidet, ob eine BSIC-Decodierung angefragt wird oder nicht.

**24.** Prozedur nach Patentanspruch 23, des Weiteren enthaltend die Schritte, dass die Messung UL_ID1 mit/durch eine neue Messungssteuernachricht gestartet/modifiziert ist; dass Ereignis6a bei dem Schwellenwert P_IRAT_HO ausgelöst werden soll; und dass Ereignis6b bei dem Schwellenwert P_IRAT_MEAS_UL - HYST_MEAS_UL2 ausgelöst werden soll.

**25.** Prozedur nach Patentanspruch 23 oder 24, des Weiteren enthaltend die Schritte zum:

- Starten einer neuen Messung vom Typ inter-RAT;
- Verleihen der Identifikation UL_ID3 an die Messung;
- Anzeigen der Messungen als entweder periodisch oder ereignisgesteuert;
- falls die Messungen ereignisgesteuert sein sollen, Anzeigen von Ereignis3a, mit den Schwellenwerten MIN_UTRAN_QUAL für die UMTS-Qualität und GSM_RXLEV_REQ für den GSM-Schwellenwert;
- Setzen des UTRAN-Qualitätsmaßes auf/bei CPICH Ec/No und Anfragen einer Messung von GSM RSSI für die beigefügte GSM-Nachbarzellenliste;

- Bestimmen der Filterung des UTRAN-Qualitätsmaßes mit Hilfe des Algorithmusparameters F_UTRAN_QUAL und W_QUAL, und Anzeigen der Filterung von GSM RSSI auf/als F-GSM; und
- der Algorithmusparameter GSM_BSIC_REQ entscheidet, ob eine BSIC-Decodierung angefragt wird oder nicht.

26. Prozedur nach Patentanspruch 25, des Weiteren enthaltend den Schritt, dass der Schwellenwert von/für EreignisA bei/auf P_IRAT_HO_DL gesetzt ist und dass der Schwellenwert von/für EreignisB bei/auf P_IRAT_MEAS_DL-HYST_MEAS_DL2 gesetzt ist.

27. Prozedur nach einem der Patentansprüche 23 - 26, des Weiteren enthaltend den Schritt, dass, wenn ein Messungsbericht vom Benutzergerät (UE) für Ereignis6a einlangt, ein Übergang/Wechsel 0 in den Handover-Zustand IRAT_HOerfolgt, falls das beste gemessene GSM RSSI GSM_RXLEV_REQ überschreitet.

28. Prozedur nach einem der Patentansprüche 23 - 26, des Weiteren enthaltend den Schritt, dass, wenn ein Messungsbericht vom Benutzergerät (UE) für Ereignis6b einlangt, ein Übergang/Wechsel J in den Abwärtsstreckenzustand IRAT_MEAS_DLerfolgt.

29. Prozedur nach einem der Patentansprüche 23 - 28, des Weiteren enthaltend den Schritt, dass, wenn ein Messungsbericht von der Basisstation (Knoten B) für EreignisA empfangen wird, und die Messung periodisch ist, ein Übergang/Wechsel 0 in den Handover-Zustand IRAT_HOerfolgt, falls beste GSM RSSI > GSM_RXLEV_REQ ist.

30. Prozedur nach einem der Patentansprüche 23 - 28, des Weiteren enthaltend den Schritt, dass, wenn ein Messungsbericht von der Basisstation (Knoten B) für EreignisA empfangen wird und falls die Messung nicht periodisch ist und kein Messungsbericht für Messung UL_ID3 empfangen wurde, UL_ID3 unmittelbar zu einer periodischen Messung modifiziert wird, und wenn der erste Messungsbericht für UL_ID3 empfangen wird, ein Übergang/Wechsel 0 in den Handover-Zustand IRAT_HO erfolgt, falls beste GSM RSSI > GSM_RXLEV_REQ ist.

31. Prozedur nach einem der Patentansprüche 23 - 28, des Weiteren enthaltend den Schritt, dass, wenn ein Messungsbericht von der Basisstation (Knoten B) für EreignisA empfangen wird und die Messung nicht periodisch ist und ein Messungsbericht für UL_ID3 vor weniger als T_GSM_VALID Sekunden empfangen wurde, ein Übergang/Wechsel 0 in den Handover-Zustand IRAT_HOerfolgt, falls beste GSM RSSI > GSM_RXLEV_REQ ist.

32. Prozedur nach einem der Patentansprüche 23 - 28, des Weiteren enthaltend den Schritt, dass, wenn ein Messungsbericht von der Basisstation (Knoten B) für EreignisA empfangen wird und die Messung nicht periodisch ist und kein Messungsbericht für UL_ID3 innerhalb von T_GSM_VALID Sekunden empfangen wurde, UL_ID3 unmittelbar zu einer periodischen Messung modifiziert wird, und wenn der erste Messungsbericht für UL_ID3 empfangen wird, ein Übergang/Wechsel 0 in den Handover-Zustand IRAT_HOerfolgt, falls beste GSM RSSI > GSM_RXLEV_REQ ist.

33. Prozedur nach einem der Patentansprüche 23 - 28, des Weiteren enthaltend den Schritt, dass, wenn ein Messungsbericht von der Basisstation (Knoten B) für EreignisB empfangen wird, ein Übergang/Wechsel H in den Aufwärtsstreckenzustand IRAT_MEAS_UL erfolgt.

34. Computerprogrammprodukt, enthaltend Programmcodeelemente, welche, wenn sie in einer computergestützten Einheit ausgeführt werden, angeordnet sind, die Schritte gemäß einem der vorherigen Patentansprüche auszuführen

**Revendications**

1. Procédure de transfert intercellulaire depuis un réseau de radiocommunication UMTS vers un réseau de radiocommunication GSM, comprenant les étapes suivantes :

- pour chaque connexion entre un équipement utilisateur (UE) et une station de base (Noeud B) dans le réseau de radiocommunication UMTS, initier un modèle d'état comportant un état de démarrage (NO_IRAT_MEAS), un état de liaison montante (IRAT_MEAS_UL), un état de liaison descendante (IRAT_MEAS_DL), un état de liaison montante/liaison descendante (IRAT_MEAS_UL/DL), et un état de transfert intercellulaire (IRAT_HO),
- dans l'état de démarrage, exécuter des mesures de puissance et passer à l'état de liaison montante (A) si la puissance de l'équipement utilisateur excède une valeur seuil, ou à l'état de liaison descendante (C) si la puissance de la station de base excède une valeur seuil,
- dans l'état de liaison montante ou dans l'état de liaison descendante, exécuter une nouvelle mesure de puissance et un nouveau contrôle de seuil pour la station de base respective de l'équipement utilisateur, et vérifier si l'intensité de signal reçu dans une liste de cellules voisines GSM excède une valeur seuil, puis

a) aller à l'état de transfert intercellulaire (K, N) si la puissance de sortie mesurée ainsi que l'intensité de signal reçu excèdent une valeur seuil respective, ou

b) aller à l'état de liaison montante/liaison descendante si un rapport de mesure indique, dans l'état de liaison montante, que la puissance de sortie de la station de base excède sa valeur seuil (G), ou si un rapport de mesure indique, dans l'état de liaison descendante (I), que la puissance de sortie de l'équipement utilisateur excède sa valeur seuil,

- dans l'état de liaison montante/liaison descendante, exécuter une nouvelle mesure de puissance et un nouveau contrôle de seuil pour l'équipement utilisateur et la station de base, et vérifier si l'intensité de signal reçu dans une liste de cellules voisines GSM excède une valeur seuil, et si toutes les valeurs seuils sont excédées, aller à l'état de transfert intercellulaire (0),

- dans l'état de transfert intercellulaire, un contrôleur de réseau radio (RNC) communique avec un contrôleur de station de base (BSC) pour réserver des ressources pour une connexion et, en cas de succès, pour transmettre une commande de transfert intercellulaire à partir de l'UTRAN à l'équipement utilisateur afin d'exécuter un transfert intercellulaire, et si l'équipement utilisateur ne réussit pas à entrer en contact avec le réseau GSM, et qu'un transfert intercellulaire n'est donc pas possible, la procédure passe à l'état du modèle d'état qui précédait l'état de transfert intercellulaire (L, M, P).

2. Procédure selon la revendication 1, dans laquelle les mesures dans l'état de démarrage NO_IRAT_MEAS comportent les étapes suivantes : un message de contrôle de mesure est transmis à l'équipement utilisateur (UE) demandant des mesures internes à l'UE de la puissance de sortie, qui sont déclenchées par l'événement Event6a, qui est déclenché lorsque la puissance de sortie de l'UE excède une valeur seuil mise à P_IRAT_MEAS_UL+HYST_MEAS_UL1.

3. Procédure selon la revendication 2, comportant en outre l'étape suivante : lorsqu'un rapport de mesure est reçu à partir de l'équipement utilisateur (UE) indiquant que Event6a a eu lieu, c'est-à-dire que la puissance de sortie de l'UE excède une valeur seuil spécifiée, une transition/un changement A est effectué(e) vers l'état de liaison montante IRAT_MEAS_UL.

4. Procédure selon la revendication 1, dans laquelle des mesures dans l'état de démarrage NO_IRAT_MEAS comportent les étapes suivantes : une mesure de la puissance de liaison descendante au code indiqué dans la station de base (Noeud B) est démarrée avec/par un message d'initiation de mesure dédiée avec des caractéristiques de rapport pour EventA dans lesquelles la valeur seuil est mise à P_IRAT_MEAS_DL + HYST_MEAS_DL1.

5. Procédure selon la revendication 4, comportant en outre l'étape suivante : lorsqu'un rapport de mesure est reçu à partir de la station de base (Noeud B) indiquant que EventA a eu lieu, c'est-à-dire que la puissance DL excède une valeur seuil spécifiée, une transition/un changement C est effectué(e) vers l'état de liaison descendante IRAT_MEAS_DL.

6. Procédure selon la revendication 1 ou 3, dans laquelle des mesures dans l'état de liaison montante NO_IRAT_UL comportent les étapes suivantes :

- une nouvelle mesure du type inter-RAT est démarrée ;
- la mesure reçoit l'identification UL_ID2 ;
- une mesure de qualité UTRAN est mise à CPICH Ec/No et une mesure de GSM RSSI est demandée pour la liste de cellules voisines GSM jointe ;
- le filtrage de la mesure de qualité UTRAN est déterminé par le paramètre d'algorithme F_UTRAN_QUAL, tandis que le filtrage de GSM RSSI est indiqué comme F_GSM ;
- le paramètre d'algorithme GSM_BSIC_REQ décide si un décodage BSIC est demandé ou non.

7. Procédure selon la revendication 6, comportant en outre les étapes suivantes : la mesure UL_ID1 est modifiée avec/par un nouveau message de contrôle de mesure ; Event6a sera déclenché à un seuil P_IRAT_HO ; et Event6b sera déclenché au seuil P_IRAT_MEAS_UL - HYST_MEAS_UL2.

8. Procédure selon la revendication 7, comportant en outre l'étape suivante : lorsqu'un rapport de mesure est reçu à partir de l'équipement utilisateur (UE) pour Event6a, une transition/un changement K est effectué(e) vers l'état de transfert intercellulaire IRAT_HOsi le meilleur GSM RSSI mesuré excède GSM_RXLEV_REQ.

9. Procédure selon l'une quelconque des revendications 6-8, comportant en outre l'étape suivante : lorsqu'un rapport de mesure est reçu à partir de l'équipement utilisateur (UE) pour Event6b, c'est-à-dire que la puissance de sortie de l'UE tombe sous le seuil spécifié, une transition/un changement B est effectué(e) vers l'état de démarrage NO_IRAT_MEAS.

10. Procédure selon l'une quelconque des revendications 6-9, comportant en outre l'étape suivante : lorsqu'un rapport de mesure est reçu à partir de la station de base (Noeud B) pour EventA, une transition/un changement G est effectué(e) vers l'état de liaison montante/liaison descendante IRAT_MEAS_UL/DL.

11. Procédure selon l'une quelconque des revendications 6-10, comportant en outre l'étape suivante : lorsqu'un rapport de mesure est reçu à partir de l'équipement utilisateur (UE) pour Event6b en même temps qu'un rapport de mesure est reçu à partir de la station de base (Noeud B) pour EventA, une transition/un changement F est effectué(e) vers l'état de liaison descendante IRAT_MEAS_DL.

12. Procédure selon l'une quelconque des revendications 1, 4 ou 11, dans laquelle des mesures dans l'état de liaison descendante IRAT_MEAS_DL comportent les étapes suivantes :

    - une nouvelle mesure du type inter-RAT est démarrée ;
    - la mesure reçoit l'identification UL_ID3 ;
    - les mesures sont indiquées comme périodiques ou comme commandées par événement ;
    - si les mesures sont commandées par événement, Event3a est indiqué, avec les seuils MIN_UTRAN_QUAL pour la qualité UMTS, et GSM_RXLEV_REQ pour la valeur seuil GSM ;
    - une mesure de qualité UTRAN est mise à CPICH Ec/No, et une mesure de GSM RSSI est demandée pour la liste de cellules voisines GSM jointe ;
    - le filtrage de la mesure de qualité UTRAN est déterminé par le paramètre d'algorithme F_UTRAN_QUAL et W_QUAL, tandis que le filtrage de GSM RSSI est indiqué par F_GSM ;
    - le paramètre d'algorithme GSM_BSIC_REQ décide si un décodage BSIC est requis ou non.

13. Procédure selon la revendication 12, comportant en outre les étapes suivantes :la mesure UL_ID1 est modifiée avec/par un nouveau message de contrôle de mesure, et Event6a, c'est-à-dire que la puissance de l'UE excède une valeur seuil spécifiée, sera déclenché au seuil P_IRAT_MEAS_UL + HYST_MEAS_UL3.

14. Procédure selon l'une quelconque des revendications 12-13, comportant en outre l'étape suivante : si un rapport de mesure est reçu à partir de l'équipement utilisateur (UE) pour Event6a, une transition/un changement I est effectué(e) vers l'état de liaison montante/liaison descendante IRAT_MEAS_UL/DL.

15. Procédure selon l'une quelconque des revendications 12-14, comportant en outre les étapes suivantes : la mesure dans la station de base (Noeud B) est modifiée ; la valeur seuil pour EventA, c'est-à-dire que $P_{DL}$ excède un seuil durant un temps spécifié d'hystérèse, est mise à P_IRAT_HO_DL ; et la valeur seuil pour EventB, c'est-à-dire que $P_{DL}$ tombe sous un seuil durant un temps spécifié d'hystérèse, est mise à P_IRAT_MEAS_DL-HYST_MEAS_DL2.

16. Procédure selon la revendication 15, comportant en outre l'étape suivante : si un rapport de mesure est reçu à partir de la station de base (Noeud B) pour EventA et si la mesure est périodique, une transition/un changement N est effectué(e) vers l'état de transfert intercellulaire IRAT_HO, si le meilleur GSM RSSI > GSM_RXLEV_REQ dans le rapport de mesure le plus courant.

17. Procédure selon la revendication 15, comportant en outre l'étape suivante : si un rapport de mesure est reçu à partir de la station de base (Noeud B) pour EventA, et si la mesure n'est pas périodique, et si aucun rapport de mesure n'a été reçu pour mesurer UL_ID3, UL_ID3 est modifié immédiatement en une mesure périodique ; et lorsque le premier rapport de mesure pour UL_ID3 est reçu, une transition/un changement est effectué(e) vers l'état de transfert intercellulaire IRAT_HO si le meilleur GSM RSSI > GSM_RXLEV_REQ.

18. Procédure selon la revendication 15, comportant en outre l'étape suivante : si un rapport de mesure est reçu à partir de la station de base (Noeud B) pour EventA et si la mesure n'est pas périodique, et si un rapport de mesure pour UL_ID3 a été reçu il y a moins de T_GSM_VALID secondes, une transition/un changement est effectué(e) vers l'état de transfert intercellulaire IRAT_HO si le meilleur GSM RSSI > GSM_RXLEV_REQ.

**19.** Procédure selon la revendication 15, comportant en outre l'étape suivante : si un rapport de mesure est reçu à partir de la station de base (Noeud B) pour EventA, et si la mesure n'est pas périodique, et qu'aucun rapport de mesure pour UL_ID3 n'a été reçu dans les T_GSM_VALID secondes, UL_ID3 est modifié immédiatement en une mesure périodique, et lorsque le premier rapport de mesure pour UL_ID3 est reçu, une transition/un changement est effectué(e) vers l'état de transfert intercellulaire IRAT_HO si le meilleur GSM_RSSI > GSM_RXLEV_REQ.

**20.** Procédure selon l'une quelconque des revendications 12-19, comportant en outre l'étape suivante : si un rapport de mesure est reçu pour Event3a à partir de l'équipement utilisateur (UE), il est sauvegardé au moins T_GSM_VALID secondes.

**21.** Procédure selon l'une quelconque des revendications 12-20, comportant en outre l'étape suivante : si un rapport de mesure est reçu à partir de l'équipement utilisateur (UE) pour Event6a en même temps qu'un rapport de mesure est reçu à partir de la station de base (Noeud B) pour EventB, une transition/un changement E est effectué(e) vers l'état de liaison montante IRAT_MEAS_UL.

**22.** Procédure selon l'une quelconque des revendications 12-21 dans laquelle, si un rapport de mesure est reçu à partir de la station de base (Noeud B) pour EventB, une transition/un changement D est effectué(e) vers l'état de démarrage NO_IRAT_MEAS.

**23.** Procédure selon la revendication 1, 10 ou 14, dans laquelle des mesures dans l'état de liaison montante/liaison descendante IRAT_MEAS_UL/DL comportent les étapes suivantes :

- si la mesure n'est pas périodique, démarrer une nouvelle mesure sur l'équipement utilisateur (UE) qui est du type inter-RAT ;
- la mesure reçoit l'identité UL_ID2 ;
- une mesure de qualité UTRAN est mise à CPICH Ec/No et une mesure de GSM RSSI est demandée pour la liste de cellules voisines GSM jointe ;
- le filtrage de la mesure de qualité UTRAN est déterminé par le paramètre d'algorithme F_UTRAN_QUAL, tandis que le filtrage de GSM RSSI est indiqué par F_GSM ;
- le paramètre d'algorithme GSM_BSIC_REQ décide si un décodage BSIC est requis ou non.

**24.** Procédure selon la revendication 23, comportant en outre les étapes suivantes : la mesure UL_ID1 est démarrée/modifiée avec/par un nouveau message de contrôle de mesure ; Event6a sera déclenché au seuil P_IRAT_HO ; et Event6b sera déclenché au seuil P_IRAT_MEAS_UL - HYST_MEAS_UL2.

**25.** Procédure selon la revendication 23 ou 24, comportant en outre les étapes suivantes :

- démarrer une nouvelle mesure du type inter-RAT ;
- donner à la mesure l'identification UL_ID3 ;
- indiquer les mesures comme périodiques ou comme commandées par événement ;
- si les mesures sont commandées par événement, Event3a est indiqué, avec les seuils MIN_UTRAN_QUAL pour la qualité UMTS, et GSM_RXLEV_REQ pour la valeur seuil GSM ;
- mettre une mesure de qualité UTRAN à CPICH Ec/No et demander une mesure de GSM RSSI pour la liste de cellules voisines GSM jointe ;
- déterminer le filtrage de la mesure de qualité UTRAN au moyen du paramètre d'algorithme F_UTRAN_QUAL et W_QUAL, et indiquer le filtrage de GSM RSSI par F-GSM ; et
- le paramètre d'algorithme GSM_BSIC_REQ décide si un décodage BSIC est requis ou non.

**26.** Procédure selon la revendication 25, comportant en outre l'étape suivante : la valeur seuil de/pour EventA est mise à P_IRAT_HO_DL et la valeur seuil de/pour EventB est mise à P_IRAT_MEAS_DL-HYST_MEAS_DL2.

**27.** Procédure selon l'une quelconque des revendications 23-26, comportant en outre l'étape suivante : lorsqu'un rapport de mesure est reçu à partir de l'équipement utilisateur (UE) pour Event6a, une transition/un changement 0 est effectué(e) vers l'état de transfert intercellulaire IRAT_HO si le meilleur GSM RSSI mesuré excède GSM_RXLEV_REQ.

**28.** Procédure selon l'une quelconque des revendications 23-26, comportant en outre l'étape suivante : lorsqu'un rapport de mesure est reçu à partir de l'équipement utilisateur (UE) pour Event6b, une transition/un changement J est effectué(e) vers l'état de liaison descendante IRAT_MEAS_DL.

**29.** Procédure selon l'une quelconque des revendications 23-28, comportant en outre l'étape suivante : lorsqu'un rapport de mesure est reçu à partir de la station de base (Noeud B) pour EventA, et que la mesure est périodique, une transition/un changement 0 est effectué(e) vers l'état de transfert intercellulaire IRAT_HO si le meilleur GSM RSSI > GSM_RXLEV_REQ.

**30.** Procédure selon l'une quelconque des revendications 23-28, comportant en outre l'étape suivante : lorsqu'un rapport de mesure est reçu à partir de la station de base (Noeud B) pour EventA, et si la mesure n'est pas périodique, et qu'aucun rapport de mesure n'a été reçu pour une mesure UL_ID3, UL_ID3 est modifié immédiatement en une mesure périodique, et lorsque le premier rapport de mesure pour UL_ID3 est reçu, une transition/un changement 0 est effectué(e) vers l'état de transfert intercellulaire IRAT_HO si le meilleur GSM RSSI > GSM_RXLEV_REQ.

**31.** Procédure selon l'une quelconque des revendications 23-28, comportant en outre l'étape suivante : lorsqu'un rapport de mesure est reçu à partir de la station de base (Noeud B) pour EventA et que la mesure n'est pas périodique, et qu'un rapport de mesure pour UL_ID3 a été reçu il y a moins de T_GSM_VALID secondes, une transition/un changement 0 est effectué(e) vers l'état de transfert intercellulaire IRAT_HO si le meilleur GSM RSSI > GSM_RXLEV_REQ.

**32.** Procédure selon l'une quelconque des revendications 23-28, comportant en outre l'étape suivante : lorsqu'un rapport de mesure est reçu à partir de la station de base (Noeud B) pour EventA, et que la mesure n'est pas périodique, et qu'aucun rapport de mesure pour UL_ID3 n'a été reçu dans les T_GSM_VALID secondes, UL_ID3 est modifié immédiatement en une mesure périodique, et lorsque le premier rapport de mesure pour UL_ID3 est reçu, une transition/un changement 0 est effectué(e) vers l'état de transfert intercellulaire IRAT_HO si le meilleur GSM RSSI > GSM_RXLEV_REQ.

**33.** Procédure selon l'une quelconque des revendications 23-28, comportant en outre l'étape suivante : lorsqu'un rapport de mesure est reçu à partir de la station de base (Noeud B) pour EventB, une transition/un changement H est effectué(e) vers l'état de liaison montante IRAT_MEAS_UL.

**34.** Produit programme d'ordinateur comportant des éléments de code informatique qui, lorsqu'ils sont exécutés dans une unité informatisée, sont conçus pour mettre en oeuvre les étapes selon l'une quelconque des revendications précédentes.

**FIG. 1**

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6615044 B2
- US 20030031143 A1